# EUROPÄISCHE PATENTSCHRIFT

(11) **EP 1 110 462 B1**
(45) Veröffentlichungstag und Bekanntmachung des Hinweises auf die Patenterteilung: **27.04.2005**
(21) Anmeldenummer: 00127737.5
(22) Anmeldetag: 19.12.2000
(51) Int. Cl.: A23L 1/308, A23P 1/04

(54) **Verkapselte multifunkionelle, biologisch aktive Nahrungsmittelkomponente, Verfahren zu ihrer Herstellung und ihre Anwendung**
Encapsulated multifunctional, biologically active food ingredient, process for its manufacture and use thereof
Agent nutritionel mutifonctionnel encapsulé, biologiquement actif, son procédé de fabrication et son utilisation

(30) Priorität: 22.12.1999 DE 19962427
(43) Veröffentlichungstag der Anmeldung: 27.06.2001
(73) Patentinhaber: Nutrinova Nutrition Specialties & Food Ingredients GmbH, 65929 Frankfurt am Main (DE); J. Rettenmaier & Söhne GmbH & Co., Faserstoff-Werke, 73494 Rosenberg (DE)
(72) Erfinder: Jager, Martin, Dr., 67294 Gauersheim (DE); Haber, Bernd, Dr., 55126 Mainz (DE); Kunz, Benno, Prof. Dr., 53307 Meckenheim (DE); Sträter, Stephanie, 51503 Rösrath-Hasbach (DE); Weissbrodt, Jenny, 51674 Wiehl (DE); Bollinger, Hartmut, 73491 Neuler (DE); Brendle, Hans-Georg, 73479 Ellwangen (DE); Bache, Georg, 74424 Bühlertann (DE)
(74) Vertreter: Schweitzer, Klaus, Dr.

(56) Entgegenhaltungen:
- WO-A-00/74501
- US-A- 4 619 831
- US-A- 4 927 649
- US-A- 5 545 414

## Beschreibung

Die Erfindung betrifft eine multifunktionelle, verkapselte biologisch aktive Nahrungsmittelkomponente, die aus einem Kern, welcher mindestens einen Ballaststoff enthält, besteht, der von mindestens einer biologisch aktiven Substanz umgeben ist und wobei der Kern und die biologisch aktive Substanz von mindestens einer hüllbildenden Substanz umgeben sind. Die Stabilität der multifunktionellen Nahrungsmittelkomponente beruht auf Wechselwirkungen der Komponenten untereinander.

Biologisch aktive Substanzen stellen bei der Ernährung physiologisch wichtige Komponenten dar. Sie können im Organismus verschiedenste Funktionen ausüben und dadurch einen positiven Beitrag zur Gesundheit leisten. Dabei können biologisch aktive Substanzen z.B. als klassische Nährstoffe fungieren, immunstimulierend oder schützend wirken aber auch in physiologische Prozesse im Körper eingreifen. Als biologisch aktive Substanzen kommen u.a. probiotische Mikroorganismen, prebiotische Substanzen, Nährstoffe oder sekundäre Pflanzeninhaltsstoffe in Frage. Eine Anreicherung der Nahrung mit solchen Komponenten in stabiler und insbesondere bioverfügbarer Form ist daher aus ernährungsphysiologischer Sicht wünschenswert.

Ballaststoffe stellen eine heterogene Produktgruppe dar. Viele Ballaststoffpräparate basieren auf Pflanzenfasern und bestehen überwiegend aus wasserunlöslichen Polysacchariden neben Pektin, Lignin und Pflanzengumen (z.B. Weizenfasern, Haferballaststoffe, Reisballaststoffe, Apfelfasern, Citrusballaststoffe etc.). Daneben gibt es auch lösliche Ballaststoffe, die meist aus komplexen Kohlehydraten aufgebaut sind (z.B. Fructo- oder Galaktooligosaccharide, β-Glucane etc.). Durch die Nahrung aufgenommene Ballaststoffe zeichnen sich dadurch aus, dass sie für den Menschen unverdauliche Bestandteile darstellen. Aufgrund ihres inerten Charakters verweilen Ballaststoffe im Darm und können dort optimal ihre physiologischen Wirkungen, wie z.B. Steigerung der Darmperistaltik, Einfluss auf die Cholesterinresorption, prebiotische Wirkungen usw., entfalten. Eine vermehrte Aufnahme von Ballaststoffen ist aus ernährungsphysiologischen Gründen wünschenswert. Als Verzehrsmenge werden von Ernährungswissenschaftlern 25-30 g an Ballaststoffen pro Tag empfohlen.

Aus den geschilderten Gründen ist es sinnvoll, Ballaststoffe und biologisch aktive Substanzen in stabiler und ernährungsphysiologisch verwertbarer Form über die Nahrung oder andere Zufuhrmöglichkeiten dem Organismus zur Verfügung zu stellen. Eine optimale Freisetzung der biologisch aktiven Substanzen ist aus den oben geschilderten Gründen erst nach der Magen-Passage im hinteren Verdauungstrakt wünschenswert. Darüber hinaus ist es wünschenswert, dass sensorisch negative Wahrnehmungen ernährungsphysiologisch wertvoller Substanzen in Lebensmitteln nicht auftreten. Dies ist im Fall von unlöslichen Ballaststoffen häufig eine deutliche sensorische Wahrnehmung der Partikel in der Lebensmittelmatrix ("kratzender Beigeschmack").

Die Technik der Mikroverkapselung findet bislang vorwiegend in der pharmazeutischen Industrie kommerzielle Anwendung. Seit einiger Zeit gibt es aber auch Arbeiten zur Nutzung der Verkapselung in der Lebensmitteltechnologie (Jackson, Lee, 1991, Kanawija et al. 1992, Hegenbart, 1993, Arshady, 1993, Dewettinck, 1997, Pegg, Shahidi, 1999). Das Verfahren der Sprühtrocknung ist eines der am häufigsten angewendeten Verfahren zur Verkapselung verschiedener Substanzen in der Lebensmittelindustrie. Dabei kann als einer der wesentlichen Vorteile angesehen werden, dass sich die Sprühtrocknung für die Verarbeitung hitzeempfindlicher Materialien eignet. Zudem ist das Verfahren kostengünstig und bietet den Vorteil, dass eine verfügbare Technologie genutzt werden kann. Um eine gezielte Nutzung für die verschiedenen Anwendungsbereiche in der Lebensmittelindustrie zu ermöglichen, müssten Untersuchungen der gängigen Materialien in unterschiedlichen Kombinationen erfolgen, da Einzelmaterialien die komplexen Anforderungen, die ein Lebensmittel an das Kapselmaterial stellt, nicht erfüllen können. Bisherige Untersuchungen befassten sich vorwiegend damit, die Flüchtigkeit von Substanzen und deren Oxidation durch Einbettung in ein geeignetes Material zu verringern. Die Einflüsse, die sich durch die physikochemischen Eigenschaften der Kapselmaterialien und der physikalischen Gegebenheiten dieses Verfahrens ergeben, bedürfen weiterer Untersuchungen. (Ré, M.I., Drying Technology, 1998, 16(6), 1195-1236)

Die meisten Patente bzw. Patentanmeldungen beziehen sich auf Anwendungsgebiete in der pharmazeutischen Industrie. Im Vordergrund stehen dabei die verwendeten Kapselmaterialien (meist in Kombination mit spezifischen Wirkungen bzw. Effekten), die kontrollierte Freisetzung von Substanzen durch die Anwendung der Verkapselungstechnik sowie die Stabilisierung von Substanzen. Im Lebensmittelbereich existieren weit weniger Patente, die aber im wesentlichen durch diese drei Richtungen bestimmt sind. Im Falle der Mikroverkapselung von Zellen oder Cell Free Extracts (CFE) steht die physiologische Stabilität in Verbindung mit ihrer Anwendung als pharmazeutisches Produkt im Vordergrund.

Die Mikroverkapselung mit den Zielrichtungen a) Einsatz von Ballaststoffen, insbesondere Faserstoffen als Trägermaterial für biologisch aktive Substanzen, insbesondere Mikroorganismen bei gleichzeitiger Erhöhung der ernährungsphysiologischen Wertigkeit, b) Wechselwirkungen Trägermaterial / Mikroorganismus, c) Unterbindung von Wechselwirkungen Trägermaterial / Kapselmaterial, d) Stabilisierung der biologisch aktiven Substanzen im Produkt und im Lebensmittel mit entsprechend verlängerter Haltbarkeit, ist bisher nicht beschrieben.

Eine Immobilisierung von Lactococcus, die unempfindlicher sind als Lactobacillusarten, ist in einer Matrix aus Alginat / Poly- Aminosäuren möglich. Bei diesem Versuch sollte untersucht werden, in wieweit sich die Stabilisierung, das Handling und die Lagerung der Mikroorganismen durch die Immobilisierung verbessern lassen. Die Milchsäureproduktion als Indikator für die Stoffwechselaktivität war nach der Behandlung und Lagerung der Mikroorganismen allerdings reduziert im Vergleich zu nicht eingebetteten Mikroorganismen. Aussagen über Wechselwirkungen des Kapselmaterials mit seiner direkten Milieuumgebung (z.B. Lebensmittel) oder mit den Mikroorganismen oder die Verwendung von Trägermaterialien wurden allerdings nicht getroffen (Larisch, B. C., Poncelet, D., Champagne, C. P., Neufeld, R. J., J. Microenc., 1994, Vol. 11, no. 2, 189-195).

Die Verkapselung von Milchsäurebakterien der Gattungen Streptococcus, Lactobacillus, Pediococcus, wurde in verschiedenen Materialien auch mittels Extrusion erreicht. Dabei untersuchte man die Lebensfähigkeit der verkapselten Organismen in dem Gastrointestinaltrakt nachempfundenen sauren Medien und die Haltbarkeit und Stabilität der verkapselten Mikroorganismen bei verschiedenen Temperaturen. Dabei wurde festgestellt, dass die Überlebensraten von den physikalisch-chemischen Eigenschaften der Kapselmaterialien abhängen. Die Haltbarkeitsversuche bei verschiedenen Temperaturen ergaben gesteigerte Überlebensraten der verkapselten Organismen bei Temperaturen über 22°C im Vergleich zu den unverkapselten Bakterien. Es wurden keine Aussagen über Stoffwechselleistung und/oder -aktivität gemacht. (Kim,H.S., Kamara, B.J., Good, l.C., Enders Jr., G.L., J. Indust. Microbiol., 1988, 3, 253-257)

Verkapselungstechniken für Milchsäurebakterien sind auch in verschiedenen Patenten beschrieben. In der WO-A 9716077 wird auf probiotische Formulierungen verwiesen, die als Lebensmittelzutaten benutzt werden können. Dabei werden die Mikroorganismen mit einer zweiten Substanz als Träger oder Hüllsubstanz vermischt, was im letzteren Fall zu einer verbesserten Stabilität gegenüber der Magenpassage führt. Herstellungsverfahren für Formulierungen zur Erhöhung der Stabilität von solchen probiotischen Mikroorganismen im Verdauungstrakt sind auch in CN-A 1113515, CN-A 1124773, WO-A 9920745 oder WO-A 9952511 beschrieben. Dabei finden v.a. Verkapselungstechniken Anwendung, um die Mikroorganismen vor der Magensäure zu schützen. Nachteil dieser Verfahren ist, dass die so erhaltenen Formulierungen in den meisten Lebensmittelanwendungen nicht stabil sind.

In WO-A 9608261, WO-A 9734615 und WO-A 9734592 ist die Mikroenkapsulierung von probiotischen Mikroorganismen mit modifizierten und unmodifizierten Stärken beschrieben. Dabei dient die Stärke als Transportmittel für die probiotischen Mikroorganismen in den Darm. In der WO-A 9826787 ist eine Methode beschrieben, bei der eine verbesserte Passage durch den Gastrointestinaltrakt für probiotische Mikroorganismen mit beta-Glucan als Träger erreicht wird.

Auch das Verfahren der Sprühtrocknung kann zur Erhöhung der Stabilität und Haltbarkeit von Bakterien genutzt werden. So konnte im Agrarbereich bei Saatgut durch Sprühtrocknung eines Stammes von Rhizobacteria eine verbesserte Haltbarmachung und ein Schutz des Saatgutes vor Krankheitsbefall und vorzeitiger Keimung erreicht werden. Die Verkapselung wurde mit Hilfe der Sprühtrocknung unter Einsatz verschiedener Materialien erreicht, die alle bis auf eine Kombination (modifizierte Stärken) für den Lebensmittelbereich nicht zugelassen sind. (Amiet-Charpentier, C., Gadille, P., Digat, B., Benoit, J. P., J. Microenc., 1998, Vol. 15, No. 5, 639-659).

Im Lebensmittelbereich konnten Milchsäurebakterien ebenfalls über verschiedene Trocknungsverfahren stabilisiert werden. So beschreibt WO-A 9957242 ein Verfahren, das für Lebensmittel geeignete Präparate aus Milchsäurebakterien mit zusätzlichen Kohlendioxid generierenden Additiven über verschiedene Trocknungsverfahren liefert. Eine erhöhte Stabilität verkapselter Mikroorganismen konnte bei Verwendung von Algen-Polysacchariden als Kapselmaterial gezeigt werden. Dabei wurden die aeroben Mikroorganismen durch Cross-Linking in das Kapselmaterial eingebettet. Die so erhaltenen Mikroorganismen sind im Umweltbereich einsetzbar und zeigten ähnlich gute Leistungen hinsichtlich PCP-Abbau wie die nicht eingebetteten Mikroorganismen. (Hammill, T. B., Crawford, R. L., Can. J. Microbiol., 1997, 43, 1091-1095)

Nachteil an den oben beschriebenen Verfahren bzw. Substanzen ist, dass sie in den meisten Lebensmittelanwendungen nicht stabil sind. Bei Zugabe insbesondere von Mikroorganismen zu Lebensmitteln sind die resultierenden Überlebensraten der Mikroorganismen zur Entfaltung von ernährungsphysiologischen Wirkungen noch zu gering. Außerdem treten bei vielen biologisch aktiven Formulierungen sensorisch negative Wahrnehmungen auf. Weiterhin ist nachteilig, dass die biologisch aktiven Formulierungen zwar an ihrer Bestimmungsort (Darm) gelangen können, dort aber aufgrund des pH-Wertes ihre Wirkung nicht voll entfalten können.

Aufgabe der vorliegenden Erfindung war es deshalb, ein System zur Verfügung zu stellen, welches gleichzeitig
- eine Wechselwirkung mit dem umgebenden Lebensmittel unterbindet (z.B. in einigen Fällen nicht erwünschte Quelleigenschaften der Ballaststofffaser unterbindet)
- ernährungsphysiologisch wertvolle Substanzen ohne sensorisch negative Wahrnehmungen zur Verfügung stellt,
- erhöhte Lagerstabilität ernährungsphysiologisch wertvoller Substanzen gewährleistet sowie
- die Mengenzufuhr und Lokalisation der Freisetzung der biologisch aktiven Substanzen am gewünschten Ort optimiert (optimierte Bioverfügbarkeit).

Gelöst wird diese Aufgabe durch eine multifunktionelle, verkapselte biologisch aktive Nahrungsmittelkomponente, die aus einem Kern, welcher mindestens einen Ballaststoff enthält, besteht, der von mindestens einer biologisch aktiven Substanz umgeben ist, wobei der Kern und die biologisch aktive Substanz von einer oder mehreren hüllbildenden Substanz umgeben sind, die bevorzugt stabile Komplexe zu den Kernmaterialien und/oder den biologisch aktiven Substanzen bilden. Da es sich in den meisten Fällen bei den biologisch aktiven Substanzen um labile Verbindungen handelt, deren Aktivität bei der Lagerung als Reinsubstanz, bei der Verarbeitung und bei der Lagerung in verarbeitetem Zustand abnimmt, stellt die im Folgenden beschriebene universelle Stabilisierungsmethode und die daraus resultierenden Stoffe im Vergleich zum Stand der Technik eine erhebliche Verbesserung dar. Zusätzlich stellt die Bioverfügbarkeit der o.g. Substanzen häufig ein Problem dar. Mit der beschrieben Methode lassen sich biologisch aktive Stoffe so formulieren dass die Bioverfügbarkeit und damit der gesundheitliche Nutzen erheblich steigt.

Unter Nahrungsmittelkomponenten im erfindungsgemässen Sinne werden natürliche und synthetische Bestandteile der menschlichen und/oder tierischen Nahrung verstanden. Weiterhin versteht man unter den Nahrungsmittelkomponenten Bestandteile, die gezielt den Präparaten zugesetzt werden und die die menschliche und/oder tierischen Nahrung ergänzen (Dietary Supplements). Unter diesem Begriff fallen weiterhin Substanzen, welche in Arzneimitteln als ernährungsphysiologische Komponenten eingesetzt werden.

'Multifunktionell' in erfindungsgemässen Sinne bedeutet, dass die verkapselte Nahrungsmittelkomponente zwei oder mehrere ernährungsphysiologische Funktionen erfüllt. So sind hierunter auch technische Funktionen zu verstehen, wie beispielsweise die verzögerte Freisetzung von ernährungsphysiologisch wirksamen Substanzen am Wirkort oder eine verbesserte sensorische Wahrnehmung der Komponenten im Lebensmittel.

Verkapselt bedeutet, dass die in Frage kommende Substanz durch eine Hülle allseitig umgeben ist. Als Hüllsubstanzen kommen insbesondere Verbindungen in Frage, die in der Lage sind, stabile Komplexe zu den Kernmaterialien und/oder den biologisch aktiven Substanzen zu bilden. Beispiele hierfür sind Mono-, Di- und Polysaccharide (hydrolysierte Stärken, mikrobielle Polysaccharide, pflanzliche Polysaccharide, saure Pflanzengummis, Pektine, Cellulosen), Emulgatoren, Peptide, Proteine und prebiotische Stoffe/Substrate.

Stabile Komplexe zu den Kemmaterialien und/oder den biologisch aktiven Substanzen entstehen insbesondere dann, wenn die genannten Materialien miteinander wechselwirken. Unter Wechselwirkungen sind hier molekulare und partikuläre Wechselwirkungen zu verstehen.

Ein Ballaststoff ist eine lebensmittelrechtlich als Nährstoff definierte Substanz, die überhaupt nicht oder nur in geringem Masse vom in Frage kommenden Organismus verstoffwechselt wird. Aufgrund ihres inerten Charakters verweilen Ballaststoffe im Darm und können dort optimal ihre physiologischen Wirkungen, wie z.B. Steigerung der Darmperistaltik, Einfluss auf die Cholesterinresorption, prebiotische Effekte usw., entfalten. Beispiele für erfindungsgemäss einsetzbare Ballaststoffe sind Pflanzenfasern (Weizenfasern, Haferfasern, Reisballaststoffe, Apfelfasern, Citrusfasern etc.), wasserunlösliche Cellulosen und Hemicellulosen, aber auch wasserlösliche Polysaccharide (z.B. β-Glucane, Fructo- bzw. Galaktooligosaccharide), Pektine, Lignine oder Pflanzengummis.

Im Folgenden werden unter 'biologisch aktiven Substanzen' Materialien verstanden, die im Organismus verschiedenste ernährungsphysiologische Funktionen ausüben und dadurch einen positiven Beitrag zum Gesundheitszustand leisten. Dabei können biologisch aktive Substanzen z.B. als klassische Nährstoffe fungieren, immunstimulierend oder schützend wirken aber auch in physiologische Prozesse im Organismus eingreifen. Als biologisch aktive Substanzen können u.a. probiotische Mikroorganismen, prebiotische Substanzen, Enzyme, Nährstoffe (Vitamine, Mineralstoffe, Spurenelemente, Aminosäuren etc.), natürliche oder synthetische sekundäre Pflanzeninhaltsstoffe (z.B. Carotinoide) oder antioxidativ wirkende Substanzen (z.B. Flavonoide) agieren.

Die verkapselten Nahrungsmittelkomponenten sind sphärische oder polygonale Gebilde mit einem - im unverarbeiteten Zustand - mittleren Durchmesser von 1 µm bis 200 µm, bevorzugt 20 bis 100 µm, insbesondere < 50 µm. Im verarbeiteten Zustand bleibt der Teilchendurchmesser unverändert, kann aber auch auf das bis zu 5-fache ansteigen.

Der Anteil des Kerns an der Nahrungsmittelkomponente beträgt in Abhängigkeit vom angestrebten Effekt im Produkt, in denen die Nahrungsmittelkomponenten eingesetzt werden soll, 10 bis 90 Gew.-%, bevorzugt grösser 50 Gew.-%. Der Anteil der biologisch aktiven Substanz an der Nahrungsmittelkomponente richtet sich nach ihrer mengenabhängigen physiologischen Wirkung und kann von weniger als 1 Gew.-% bis mehr als 50 Gew.-%, bevorzugt 10 bis 20 Gew.-%, betragen. Der Anteil der Hüllmaterialien an der Nahrungsmittelkomponente wird durch die zielproduktorientierte Funktionalität bestimmt und beträgt bis zu 50 Gew.-%, bevorzugt jedoch unter 10 Gew.-%.

Zur Herstellung der erfindungsgemässen Nahrungsmittelkomponenten geht man zweckmässigerweise so vor, dass man die biologisch aktive Substanz oder die Mischung von zwei oder mehreren biologisch aktiven Substanzen), in ein Medium einbringt, das eine oder mehrere hüllgebende Substanzen enthält. Die so erhaltene Mischung wird dann mit dem oder den Ballaststoff(en) angereichert und homogen durchmischt und anschliessend vom Lösungs- bzw. Dispersionsmittel befreit.

Handelt es sich bei der biologisch aktiven Substanz um eine Mikroorganismensuspension, so führt man zu deren Herstellung eine Fermentation durch, wobei darauf zu achten ist, dass ausreichend hohe Zelldichten, vorzugsweise > 1•10⁹ pro ml KBE (koloniebildende Einheiten), erreicht werden. Ggf. kann auch eine Aufkonzentrierung der Mikroorganismensuspension durch Zentrifugation, Filtration oder andere dem Stand der Technik entsprechende Konzentrierungsverfahren erfolgen. Dieser Schritt wird insbesondere dann erforderlich, wenn mit den üblicherweise erreichbaren Zelldichten keine ausreichend hohe Konzentration in den verkapselten Nahrungsmittelkomponenten erreicht werden kann. Die Konzentrierung kann um zwei Zehnerpotenzen bis auf ca. 10¹¹ KBE pro ml, vorzugsweise jedoch um eine Zehnerpotenz vorgenommen werden.

Des weiteren ist es zweckmäßig, dass Komponenten des Fermentationsmediums zur Hüllbildung beitragen sollten. Solche Substanzen können u.a. Proteine, Peptide, Kohlenhydrate oder Mineralstoffe sein.

Bei der Einbringung der biologisch aktiven Substanzen in das Lösungs- bzw. Dispersionsmittel ist darauf zu achten, dass eine homogene Verteilung erreicht wird und nach der teilweisen oder vollständigen Entfernung des Lösungs- bzw. Dispersionsmittels das angestrebte Mengenverhältnis zwischen Ballaststoff, Hüllmaterialien und biologisch aktiven Substanzen entsteht. Sofern zweckmässig, kann auch die hüllgebende Substanz vorgelegt werden und mit der biologisch aktiven Substanz versetzt werden.

Bei der Herstellung der Mischung spielt die Reihenfolge der Zugabe der einzelnen Komponenten keine Rolle, es ist jedoch darauf zu achten, dass unerwünschte Aggregationen nicht auftreten. Dies gilt insbesondere bei der Zugabe von Mineralstoffen, die in Lösung dissoziieren. Erst während des sich anschliessenden Trocknungsprozesses kommt es als Folge von gezielt beabsichtigten Wechselwirkungen zwischen den Komponenten der Hüllmaterialien, den biologisch aktiven Substanzen und den Ballaststoffen zu Komplexbildungen, die zur Stabilisierung der verkapselten Nahrungsmittelkomponenten von Bedeutung sind. Die Entfernung des Lösungs- bzw. Dispersionsmittels erfolgt durch bekannte Trocknungsverfahren, wie z.B. Sprühtrocknung, Wirbelschichttrocknung, Gefriertrocknung u.a., vorzugsweise jedoch durch Sprühtrocknung. Dabei wird in den Fällen, wo alle Bestandteile der zu verkapselnden Nahrungsmittelkomponente in einer Dispersion vorliegen eine Einstoffdüse zum Versprühen verwendet, die die Entstehung von ausreichend kleinen Partikeln während des Sprühvorgangs gewährleistet. Vorzugsweise werden Düsen mit einem Düsendurchmesser von 0,1 bis 2,0 mm verwendet. Es kann sich aber auch als zweckmässig erweisen, dass das Hüllmaterial erst unmittelbar beim Verkapseln mit der Mischung zusammenkommen soll, so dass die Zusammenführung im Trockner über eine Zweistoffdüse erfolgt.

Der Vorteil der Erfindung liegt darin, dass bioaktive Substanzen durch die Verwendung von Ballaststoffen, vorzugsweise Fasermaterialien, in der Weise zu Nahrungsmittelkomponenten verarbeitet werden können, dass sie eine hohe Stabilität nach dem Trocknungsprozess, im eingearbeiteten Lebensmittel, während der Lagerung des Lebensmittels und im Verdauungstrakt erreichen. Die Freisetzung der Nahrungsmittelkomponenten mit ihren physiologisch multifunktionellen Eigenschaften erfolgt erst an der optimalen Stelle im Verdauungstrakt. Darüber hinaus lassen sich technologisch funktionelle Eigenschaften im Lebensmittel durch die Einarbeitung der Nahrungsmittelkomponenten erzielen, die zur sensorischen Aufwertung wie etwa durch erhöhte Cremigkeit der Endproduktes führen.

Anwendung kann die Erfindung in sehr vielen Lebensmittelgruppen wie Milchprodukten (Sauermilchprodukte, Frischkäse, Käsezubereitungen), Fleischverarbeitungsprodukten (Rohwurst, Brühwurst, Kochwurst, Fleischpasteten, Fleischsalaten), Obstund Gemüseprodukten ( Konfitüren, Gelees, Fruchtsäften, Gemüsepürees, Gemüsesäften), Backwaren (Brot, Kleingebäck, Konditoreiwaren), Getränken aber auch in Nahrungsergänzungen, in der Tierernährung (Haus- und Kleintiere; Nutztiere) sowie in kosmetischen Mittel und in Arzneimitteln u.a. finden.

Im Nachfolgenden ist die Erfindung anhand von Beispielen erläutert.

### Beispiel 1

1 Gew.-% Weizenfaser wird in Wasser suspendiert und mit MRS-Boullion versetzt und autoklaviert. Diese Mischung wird mit einer Mikroorganismenkultur (Lactobacillus acidophilus) beimpft und für 24 Stunden bei 37°C fermentiert, bis eine Keimzahl von 10⁹ cfu ml⁻¹ erreicht ist. Kultur und Weizenfaser werden abzentriefugiert und mit einer 0,1 Gew.-%igen Maltoselösung einmalig ausgewaschen. Der Überstand wird abgetrennt und der Rückstand mit 0,1 Gew.-%iger Maltoselösung aufgenommen. In einem zweiten Ansatz wird das Kapselmaterial B in diesem Beispiel 4 Gew.-% Gum Arabic - in Wasser suspendiert. Durch Zugabe der Mikroorganismen/Weizenfaser-Mischung zum Kapselmaterial wird eine versprühbare Dispersion hergestellt. Diese Dispersion wird während der nachfolgenden Sprühtrocknung zur Gewährleistung einer gleichmässigen Verteilung der Dispergentien durchgehend mit 500 U min⁻¹ gerührt. Der Trocknungsprozess wurde mit den folgenden Parametereinstellungen durchgeführt:
Trockenlufttemperatur: 170-185 °C
Ablufttemperatur: 55-60 °C
Sprühdruck: 1 bar
Ansaugdruck: 0,01 bar

Das resultierende feine weisse Pulver wurde zur Bestimmung der Überlebensrate der verkapselten Mikroorganismen in wässriger Lösung suspendiert. Die Überlebensrate lag bei > 60 Gew.-%.

In diesem Beispiel dient die Weizenfaser als multifunktionelle Lebensmittelzutat durch ihren Ballaststoffcharakter einerseits und ihre gleichzeitige Funktion als Trägermaterial für die Mikroorganismen. Gum Arabic dient als Kapselmaterial und Maltose als technisches Hilfsmittel wie auch als zusätzliche C-Quelle für die Bakterien.

### Beispiel 2

Die Anzucht- und Fermentationsbedingungen der Mikroorganismen erfolgt analog zu Beispiel 1. Die Suspension der Kapselmaterialien wird in diesem Beispiel durch ein netzbildendes Protein mit 2 Gew.-% Gelatine erweitert, so dass ein Copolymer mit festen Kapselstrukturen entsteht. Nach Herstellen der Dispersion, bestehend aus Mikroorganismensuspension und Kapselmaterialsuspension wird diese wie im Beispiel 1 getrocknet.

### Beispiel 3

Das Kapselmaterial dieses Beispiels setzt sich aus mehreren Substanzen wie folgt zusammen: 3 Gew.-% Gum Arabic, 1 Gew.-% Gelatine, 0,5 Gew.-% Xanthan, 0,3 Gew.-% Citronensäure. Die Substanzen wurden unter ständigem Rühren in Wasser dispergiert und mit der nach Beispiel 1 aufbereiteten Mikroorgansimensuspension vermischt. Dieses Gemisch wird unter denselben Bedingungen wie in Beispiel 1 beschrieben getrocknet. Das Ergebnis ist ein feinkristallines Pulver mit einer Mikroorganismendichte in Höhe von > 60 Gew.-% bezogen auf die Ausgangsmenge.

Gum Arabic und Gelatine bilden ein Copolymer, dessen Bildung durch die Zugabe von Xanthan und Citronensäure unterstützt wird. Xanthan kann gleichzeitig durch die darin enthaltenen Mengen an Acetat und Pyruvat als Energielieferant für die Mikroorganismen fungieren.

### Beispiel 4

In diesem Beispiel wurden gezielt einzelne Bestandteile des Aufzuchtmediums (MRS-Bouillion) in die Bildung eines stabilen Kapsel-Mikroorganismen-Komplex integriert. Bei den hier verwendeten Substanzen handelt es sich um ®Tween 80 in einer Konzentration von 0,1 Gew.-% als Wachstumsförderer für die Bakterien, weiterhin um 1 Gew.-% Maltose im Tausch für Glucose als C-Quelle und als Komplexierungshilfe werden 0,09 Gew.-% Calciumacetat anstelle von Natriumacetat eingesetzt. Die nach Beispiel 1 hergestellte Bakteriensuspension wird mit einer Dispersion der o. g. Substanzen in Wasser aufgenommen. In die so hergestellte Mischung wird anschliessend eine wässrige 1-2 Gew.-%ige Alginatlösung eingesprüht. Das auf diese Weise erhaltenen Produkt wird im Sprühturm wie in Beispiel 1 beschrieben getrocknet.

### Beispiel 5

Analog der Vorgehensweise in Beispiel 4 werden bestimmte Inhaltsstoffe des Aufzuchtmediums durch Substanzen ersetzt, die zum einen zur Kapselbildung und zum anderen als Substrat für den Mikroorganismus dienen können. Hier wurden verwendet: Albumin als Kapselmaterial und als N-Quelle, Lecithin als Emulgator und Bindungshilfe zwischen Eiweiss und Zucker sowie als P-Quelle und Maltose als Hilfsstoff bei der Kapselbildung und als C-Quelle. Die Substanzen werden in folgenden Konzentrationen in Wasser gelöst: Albumin 4 Gew.-%, Lecithin 0,5 Gew.-% und Maltose 0,5 Gew.-%. Zu dieser Mischung wird die nach Beispiel 1 hergestellte Bakteriensuspension gegeben. Die Dispersion wird unter den in Beispiel 1 angegebenen Standardbedingungen versprüht. Als Ergebnis dieses Verfahrens erhält man ein voluminöses feinkristallines Pulver.

### Beispiel 6

Anzucht und Fermentation der Mikroorganismen wie in Beispiel 1. Für die Ausbildung der Schutzhülle werden in einem ersten Schritt 3 Gew.-% Pektine mit 0,5 Gew.-% Inulin in Wasser suspendiert. Dieser Mischung wird die aufbereitete Bakteriensuspension zugesetzt. In einem dritten Schritt wird unter ständigem Rühren ca. 0,1 Gew.-% Calciumchlorid zugefügt. Die so erhaltene Mischung wird unter Standardbedingungen sprühgetrocknet. In diesem Beipiel dient Pektin als Kapselmaterial, das Inulin wird als Verarbeitungshilfsstoff mit prebiotischen Eigenschaften eingesetzt. Durch den Zusatz von Calciumchlorid bildet das Pektin ein sogenanntes calciumverbrücktes Gel.

### Beispiel 7

Unter Verwendung von 2,5 Gew.-% Maltodextrin, 0,5 Gew.-% Lecithin und 1 Gew.-% Gum Guar als Kapselmaterialien ergibt sich eine hochviskose Dispersion. Diese wird mit der nach Beispiel 1 hergestellten Bakteriensuspension vermischt und unter Standardbedingungen versprüht. Die Substanzen Maltodextrin und Lecithin bilden ein gelartiges Netzwerk aus, wobei das Geliervermögen des eingesetzten Polysaccharides durch das verwendet Gum Guar erhöht wird.

### Beispiel 8

Wie unter Beispiel 1 beschrieben wird auch hier eine Mikroorganismensuspension mit Weizenfasem als Trägermaterial hergestellt. Diese Suspension wird im folgenden mit einer wässrigen 0,5 Gew.-%igen Xanthanlösung zur Stabilisierung aufgenommen. Das so erhaltenen Gemisch wird mit einer zuvor hergestellten Dispersion aus 2,5Gew.-% Albumin und 1Gew.-% Carboxymethylcellulose in Wasser unter ständigem Rühren vermischt. Das eingesetzte Albumin bildet mit der Carboxymethylcellulose einen Komplex, der als Kapselmaterial fungiert.

## Patentansprüche

1. Multifunktionelle, verkapselte biologisch aktive Nahrungsmittelkomponente, bestehend aus einem Kern , welcher mindestens einen Ballaststoff enthält, der von mindestens einer biologisch aktiven Substanz umgeben ist , wobei der Kern und die biologisch aktive Substanz(en) von einer oder mehreren hüllbildenden Substanz(en) umgeben sind.

2. Nahrungsmittelkomponente nach Anspruch 1, **dadurch gekennzeichnet, dass** der Ballaststoff ausgewählt wird aus Pflanzenfasern (Weizenfasern, Apfelfasern, Haferfasern), wasserunlöslichen (Cellulosen) und wasserlöslichen Polysacchariden, Pektinen, Lignin und Pflanzengummis.

3. Nahrungsmittelkomponente nach Anspruch 1 oder 2, **dadurch gekennzeichnet, dass** die Hüllsubstanz(en) in der Lage ist (sind), einen stabilen Komplex zu dem Kernmaterial und/oder der (den) biologisch aktiven Substanz(en) zu bilden.

4. Nahrungsmittelkomponente nach Anspruch 3, **dadurch gekennzeichnet, dass** die Hüllsubstanz ausgewählt wird aus einer oder mehreren der folgenden Substanzen: Mono-, Di- und Polysaccharide (hydrolysierte Stärken, mikrobielle Polysaccharide, pflanzliche Polysaccharide, saure Pflanzengummis, Pektine, Cellulosen), Emulgatoren, Peptide, Proteine und prebiotische Stoffe/Substrate.

5. Nahrungsmittelkomponente nach einem oder mehreren der Ansprüche 1 bis 4, **dadurch gekennzeichnet, dass** der Ballaststoff ausgewählt wird aus einer oder mehreren der folgenden Substanzen: Pflanzenfasern (Weizenfasern, Haferfasern, Reisballaststoffe, Apfelfasem, Citrusfasern), wasserunlösliche Cellulosen und Hemicellulosen, wasserlösliche Polysaccharide (z.B. β-Glucane, Fructo- bzw. Galaktooligosaccharide), Pektine, Lignine oder Pflanzengummis.

6. Nahrungsmittelkomponente nach einem oder mehreren der Ansprüche 1 bis 5, **dadurch gekennzeichnet, dass** die biologisch aktive Substanz ausgewählt wird aus einer oder mehreren der folgenden Substanzen: probiotische Mikroorganismen, prebiotische Substanzen, Enzyme, Nährstoffe (Vitamine, Mineralstoffe, Spurenelemente, Aminosäuren), natürliche oder synthetische sekundäre Pflanzeninhaltsstoffe (z.B. Carotinoide) und antioxidativ wirkende Substanzen (z.B. Flavonoide).

7. Nahrungsmittelkomponente nach einem oder mehreren der Ansprüche 1 bis 6, **dadurch gekennzeichnet, dass** sie sphärische oder polygonale Gestalt hat mit einem - im unverarbeiteten Zustand - mittleren Durchmesser von 1 µm bis 200 µm.

8. Nahrungsmittelkomponente nach einem oder mehreren der Ansprüche 1 bis 7, **dadurch gekennzeichnet, dass** der Anteil des Kerns an der Nahrungsmittelkomponente 10 bis 90 Gew.-% beträgt.

9. Nahrungsmittelkomponente nach einem oder mehreren der Ansprüche 1 bis 8, **dadurch gekennzeichnet, dass** der Anteil der biologisch aktiven Substanz an der Nahrungsmittelkomponente < 1 Gew.-% bis > 50 Gew.-% beträgt.

10. Nahrungsmittelkomponente nach einem oder mehreren der Ansprüche 1 bis 9, **dadurch gekennzeichnet, dass** der Anteil der Hüllmaterialien an der Nahrungsmittelkomponente ≤ 50 Gew.-% beträgt.

11. Verfahren zur Herstellung einer Nahrungsmittelkomponente nach Anspruch 1, **dadurch gekennzeichnet, dass** man eine biologisch aktive Substanz oder eine Mischung von zwei oder mehreren biologisch aktiven Substanzen, in ein Medium einbringt, das eine oder mehrere hüllgebende Substanzen enthält, die so erhaltene Mischung dann mit einem oder mehreren Ballaststoff(en) anreichert und homogen durchmischt und anschließend von Lösungs- bzw. Dispersionsmitteln befreit.

12. Verwendung von Nahrungsmittelkomponenten nach Anspruch 1 in Milchprodukten, Fleischverarbeitungsprodukten, Obst- und Gemüseprodukten, Backwaren, Getränken, Tiernahrung, kosmetischen Mittel oder in Arzneimitteln.

## Claims

1. A multifunctional encapsulated biologically active food component consisting of a core which comprises at least one dietary fiber, which core is surrounded by at least one biologically active substance, in which the core and the biologically active substance(s) are encapsulated by one or more shell-forming substance(s).

2. The food component as claimed in claim 1, wherein the dietary fiber is selected from plant fibers (wheat fibers, apple fibers, oat fibers), water-insoluble polysaccharides (celluloses) and water-soluble polysaccharides, pectins, lignin and plant gums.

3. The food component as claimed in claim 1 or 2, wherein the shell substance(s) is (are) able to form a stable complex with the core material and/or the biologically active substance(s).

4. The food component as claimed in claim 3, wherein the shell substance is selected from one or more of the following substances: mono-, di- and polysaccharides (hydrolyzed starches, microbial polysaccharides, plant polysaccharides, acidic plant gums, pectins, celluloses), emulsifiers, peptides, proteins and prebiotic substances/substrates.

5. The food component as claimed in one or more of claims 1 to 4, wherein the dietary fiber is selected from one or more of the following substances: plant fibers (wheat fibers, oat fibers, rice dietary fibers, apple fibers, citrus fibers), water-insoluble celluloses and hemicelluloses, water-soluble polysaccharides (for example β-glucans, fructo- or galactooligosaccharides), pectins, lignins or plant gums.

6. The food component as claimed in one or more of claims 1 to 5, wherein the biologically active substance is selected from one or more of the following substances: probiotic microorganisms, prebiotic substances, enzymes, nutrients (vitamins, minerals, trace elements, amino acids), natural or synthetic secondary plant constituents (for example carotenoids) and substances having antioxidant activity (for example flavonoids).

7. The food component as claimed in one or more of claims 1 to 6, which has a spherical or polygonal shape having a mean diameter, in the unprocessed state, of from 1 µm to 200 µm.

8. The food component as claimed in one or more of claims 1 to 7, wherein the core content of the food component is from 10 to 90% by weight.

9. The food component as claimed in one or more of claims 1 to 8, wherein the content of the biologically active substance in the food component is from < 1 % by weight to > 50% by weight.

10. The food component as claimed in one or more of claims 1 to 9, wherein the content of shell materials in the food component is ≤ 50% by weight.

11. A process for producing a food component as claimed in claim 1, which comprises introducing a biologically active substance or a mixture of two or more biologically active substances into a medium which comprises one or more shell-forming substances, then enriching the resultant mixture with one or more dietary fiber(s) and homogeneously mixing the mixture and then freeing it from solvents or dispersion media.

12. The use of food components as claimed in claim 1 in milk products, meat processing products, fruit and vegetable products, bakery products, beverages, animal nutrition, cosmetics or in pharmaceuticals.

## Revendications

1. Composante d'aliment biologiquement actif encapsulée et multifonctionnelle, composée d'un noyau contenant au moins une matière de fibre, entouré d'au moins une substance biologiquement active, le noyau et la ou les substance(s) biologiquement active(s) étant entourés par une ou plusieurs substance(s) formant enveloppe.

2. Composante d'aliment selon la revendication 1, **caractérisée en ce que** la matière de fibres est choisie parmi les fibres végétales (fibres de blé, fibres de pomme, fibres d'avoine), les polysaccharides solubles dans l'eau et non solubles dans l'eau (celluloses), les pectines, lignines et gommes végétales.

3. Composante d'aliments selon la revendication 1 ou 2, **caractérisée en ce que** la ou les substances formant enveloppe sont aptes à former un complexe stable vis-à-vis du matériau du noyau et/ou de la ou des substances biologiquement actives.

4. Composante d'aliment selon la revendication 3, **caractérisée en ce** la substance formant enveloppe est choisie parmi l'une ou plusieurs des substances suivantes : mono-, di- et polysaccharides (amidons hydrolysés, polysaccharides microbiens, polysaccharides végétaux, gommes végétales acides, pectines, celluloses), émulsifiants, peptides, protéines et matières prébiotiques/substrats.

5. Composante d'aliment selon l'une quelconque des revendications 1 à 4, **caractérisée en ce que** la matière de fibres est choisie parmi l'un ou plusieurs des substances suivantes : fibres végétales (fibres de blé, fibres d'avoine, fibres de riz, fibres de pomme, fibres d'agrumes), celluloses et hémicellulose non solubles dans l'eau, polysaccharides solubles dans l'eau (par exemple bétaglucans, fructo- ou galacto-oligosaccharides), pectines, lignines ou gommes végétales.

6. Composante d'aliment selon l'une quelconque des revendications 1 à 5, **caractérisée en ce que** la substance biologiquement active est choisie parmi l'une ou plusieurs des substances suivantes : micro-organismes probiotiques, substances prébiotiques, enzymes, matières nutritives (vitamines, minéraux, oligo-éléments, acides aminés), constituants végétaux secondaires naturels ou synthétiques (par exemple carotinoïdes) et substances à effet anti-oxydatif (par exemple flavonoïdes).

7. Composante d'aliment selon l'une quelconque des revendications 1 à 6, **caractérisée en ce qu'**elle a une forme sphérique ou polygonale avec un diamètre moyen -à l'état non transformé- de 1 µm à 200 µm.

8. Composante d'aliment selon l'une quelconque des revendications 1 à 7, **caractérisée en ce que** la proportion du noyau dans la composante d'aliment est de 10 à 90 % en poids.

9. Composante d'aliment selon l'une quelconque des revendications 1 à 8, **caractérisée en ce que** la proportion de substance biologiquement active dans la composante d'aliment est < 1 % en poids jusqu'à > 50% en poids.

10. Composante d'aliment selon l'une quelconque des revendications 1 à 9, **caractérisée en ce que** la proportion de matière formant enveloppe dans la composante d'aliment est ≤ 50 % en poids.

11. Procédé de préparation d'une composante d'aliment selon la revendication 1, **caractérisé en ce que** l'on introduit une substance biologiquement active ou un mélange de deux ou plusieurs substances biologiquement actives dans un milieu contenant une ou plusieurs substance formant enveloppe, le mélange ainsi obtenu étant ensuite enrichi d'un ou plusieurs matériau(x) de fibres et mélangé de façon homogène puis ensuite libéré des solvants et/ou moyens formant dispersion.

12. Utilisation de composante d'aliment selon la revendication 1 dans des produits laitiers, des produits à base viande, des produits à base de fruits ou de légumes, des produits de pâtisserie, des boissons, des aliments pour animaux, des produits cosmétiques ou des produits pharmaceutiques.
